# EUROPÄISCHE PATENTSCHRIFT

(11) **EP 3 581 029 B1**
(45) Veröffentlichungstag und Bekanntmachung des Hinweises auf die Patenterteilung: **07.04.2021**
(21) Anmeldenummer: 19176854.8
(22) Anmeldetag: 28.05.2019
(51) Int. Cl.: A21C 5/04

(54) **TEIGPORTIONIERVORRICHTUNG**
DOUGH PORTIONING DEVICE
DISPOSITIF DE DIVISION EN PORTIONS DE PÂTE

(30) Priorität: 13.06.2018 DE 202018103311 U
(43) Veröffentlichungstag der Anmeldung: 18.12.2019
(73) Patentinhaber: Werner & Pfleiderer Lebensmitteltechnik GmbH, 91550 Dinkelsbühl (DE)
(72) Erfinder: Meier, Alexander, 91602 Dürrwangen (DE)
(74) Vertreter: Rau, Schneck & Hübner Patentanwälte Rechtsanwälte PartGmbB

(56) Entgegenhaltungen:
- WO-A1-2018/064701
- DE-C1- 3 530 724
- GB-A- 191 003 771
- US-A- 1 080 890
- US-A- 3 794 234
- US-A- 5 211 968
- US-A1- 2004 258 819

## Beschreibung

Die vorliegende Patentanmeldung nimmt die Priorität der deutschen Gebrauchsmusteranmeldung 20 2018 103 311.5 in Anspruch.

Die Erfindung betrifft eine mehrreihige Teigportioniervorrichtung mit einer Mehrzahl von Portionierkammern zur Vorgabe einer portionierten Teigmenge und mit einer Mehrzahl von Messkolben, die in den Portionierkammern jeweils verlagerbar sind.

Derartige Teigportioniervorrichtungen sind bekannt aus der DE 10 2013 221 230 A1, aus der EP 2 071 955 B1, aus der EP 3 298 900 A, aus der DE 196 40 176 A1 und aus der EP 0 643 914 A1.

Die US 1,080,890 A offenbart einen Teigteiler. Die US 2004/258 819 A1 offenbart eine Teigteilmaschine. Die WO 2018/064 701 A1 offenbart einen I-C-AW Programm-Zyklus gesteuerten Ablauf einer Teiltrommel für Teigteil und Wirkmaschine. Die GB 03 771 A offenbart Verbesserungen für eine Maschine zum Teilen von Teig und Kunststoffen. Die US 5,211,968 A offenbart eine Teigteilmaschine. Die DE 35 30 724 C1 offenbart eine Teigteilmaschine. Die US 3,794,234 A offenbart eine Teigmessmaschine.

Die Aufgabe der Erfindung ist es, eine Teigportioniervorrichtung bereitzustellen, die bei gegebener Baugröße insbesondere des Portionierzylinders im Vergleich zum Stand der Technik ein größeres Portioniervolumen ermöglicht bzw. die bei gegebenem Portioniervolumen insbesondere beim Portionierzylinder kleiner baut.

Diese Aufgabe ist erfindungsgemäß gelöst durch eine Teigportioniervorrichtung mit dem im Anspruch 1 angegebenen Merkmalen.

Erfindungsgemäß wurde erkannt, dass es überraschend möglich ist, einen Verlagerungshub des Messkolbens in der Portionierkammer und damit im Portionierzylinder größer als einen halben Durchmesser des Portionierzylinders auszuführen, ohne dass hierbei an sich zu erwartende Verkantungsprobleme resultieren. Der Verlagerungshub kann größer sein als 55% des Durchmessers des Portionierzylinders und kann beispielsweise 57% des Durchmessers des Portionierzylinders betragen. Der Messkolben der Teigportioniervorrichtung ist über jeweils zwei axial beabstandete Führungsflächen in der zugeordneten Portionierkammer geführt. Ein axialer Abstand der Führungsflächen ist hierbei kleiner als ein Drittel des Durchmessers des Portionierzylinders. Eine solche Führungsflächen-Anordnung ist kompakt und gewährleistet, was durchaus überraschend ist, immer noch eine ausreichende Führungsstabilität des Messkolbens in der Portionierkammer. Anstelle von mehreren Führungsflächen kann der Messkolben auch über genau eine Messkolben-Führungsfläche in der zugeordneten Portionierkammer geführt sein. Eine Axialerstreckung einer solchen, einzigen Führungsfläche des Messkolbens ist dann ebenfalls kleiner als ein Drittel des Durchmessers des Portionierzylinders und kann je nach Ausführung auch kleiner sein als 30%, kleiner sein als 25% oder kleiner als 20% des Durchmessers des Portionierzylinders.

Bei einer Teigportioniervorrichtung gemäß Anspruch 2 steht die Führungsrichtung des Messkolbens in der Portionierkammer senkrecht auf der Durchmesserdimension des Portionierzylinders. Die Schwenkachse, um die herum der Durchmesser des Portionierzylinders gemessen wird, verläuft also nicht längs der Führungsrichtung des Messkolbens bei dessen Hubverlagerung zwischen der Messstellung und der Ausstoßstellung.

Bei einer Teigportioniervorrichtung gemäß Anspruch 3 steht die Führungsrichtung des Messkolbens senkrecht auf einer Schwenkachse beim Verschwenken des Portionierzylinders zwischen der Mess-Schwenkstellung und der Ausstoß-Schwenkstellung.

Bei einer Portioniervorrichtung gemäß Anspruch 4 ist der axiale Abstand der Führungsflächen kleiner als 30% des Durchmessers des Portionierzylinders.

Bei einer Portioniervorrichtung gemäß Anspruch 5 ist der axiale Abstand der Führungsflächen kleiner als 25% des Durchmessers des Portionierzylinders.

Bei einer Portioniervorrichtung gemäß Anspruch 6 ist der axiale Abstand der Führungsflächen kleiner als 20% des Durchmessers des Portionierzylinders.

Die Teigportioniervorrichtung ist derart weitergebildet, dass deren Portioniergenauigkeit, insbesondere im Vergleich zwischen den einzelnen Reihen der Teigportioniervorrichtung, verbessert ist. Hierzu hat die Teigportioniervorrichtung
- eine Antriebseinheit, aufweisend eine Steuerkomponente, zur Verlagerung der Messkolben von der Messstellung in die Ausstoßstellung, wobei die Teigportioniervorrichtung so ausgeführt ist, dass eine Verlagerung der Messkolben von der Ausstoßstellung in die Messstellung ausschließlich über einen vom Teig auf die Messkolben ausgeübten Druck erfolgt,
- wobei die Steuerkomponente mit allen Messkolben zur Übertragung einer Zugkraft von der Steuerkomponente auf die Messkolben verbunden ist.

Die Steuerkomponente ist dabei als Steuerrolle ausgeführt, die zum Zusammenwirken mit einer Steuerkurve (der Antriebseinheit ausgebildet ist.

Erfindungsgemäß wurde erkannt, dass eine Steuerkomponente, die mit allen Messkolben zur Übertragung einer Zugkraft von der Steuerrolle auf die Messkolben verbunden ist, dazu führt, dass alle Messkolben aufgrund einer entsprechenden Zugkraftübertragung über die Steuerrolle in die gleiche Endlage in der Messstellung verbracht werden. Es resultiert eine Teigbearbeitungsvorrichtung ohne Abweichungen beim Erreichen der Messstellung im Vergleich zwischen den verschiedenen Messkolben der Reihen der Teigportioniervorrichtung.

Eine entsprechend hohe Portioniergenauigkeit, insbesondere im Vergleich zwischen den Reihen der Teigportioniervorrichtung, ist die Folge. Diese Genauigkeit kann zu einer relativen Abweichung führen, die kleiner ist als 2%, die kleiner ist als 1% und die auch kleiner sein kann als 0,5%.

Eine Verbindungseinheit nach Anspruch 7 ermöglicht einen Schwenk-Freiheitsgrad zwischen dem Messkolben und der Steuerkomponente. Ein derartiger Schwenk-Freiheitsgrad kann Verkantungen, insbesondere bei einer Verlagerungsbewegung der Messkolben, vermeiden.

Ein Kunststoff-Messkolben nach Anspruch 8 kann einen geringen Verschleiß gewährleisten.

Die Teigportioniervorrichtung mit dem vergrößerten Verlagerungshub des Messkolbens zwischen der Messstellung und der Ausstoßstellung kann zudem diejenigen Merkmale aufweisen, die vorstehend im Zusammenhang mit der Zugkraftübertragung zwischen der Steuerkomponente und allen Messkolben erläutert wurden.

Die Vorteile einer Teigbearbeitungsanlage nach Anspruch 9 entsprechen denen, die vorstehend in Zusammenhang mit der Teigportioniervorrichtung bereits erläutert wurden.

Ausführungsbeispiele der Erfindung werden nachfolgend anhand der Zeichnungen näher erläutert. In dieser zeigen:
- Fig. 1: eine Seitenansicht eines Portioniermoduls einer mehrreihigen Teigportionvorrichtung;
- Fig. 2: eine Seitenansicht auf das Portioniermodul, gesehen aus Blickrichtung II in Fig. 1;
- Fig. 3: einen Schnitt gemäß Linie III-III in Fig. 2;
- Fig. 4: eine Aufsicht, gesehen aus Blickrichtung IV in Fig. 1;
- Fig. 5: perspektivisch eine als Steuerrolle ausgeführte Steuerkomponente einer Antriebseinheit der Teigportioniervorrichtung zusammen mit der Steuerrolle verbundenen Messkolben;
- Fig. 6: eine Aufsicht auf die Baugruppe nach Fig. 5;
- Fig. 7: eine Seitenansicht der Baugruppe gemäß Blickrichtung VII in Fig. 6; und
- Fig. 8: einen Schnitt gemäß Linie VIII-VIII in Fig. 6.

Eine Teigbearbeitungsanlage, von der in der Zeichnung ein Portioniermodul 1 einer in der dargestellten Ausführung vierreihigen Teigportioniervorrichtung dargestellt ist, dient zum Portionieren und zum Wirken von Teig, z.B. bei der Brötchenherstelllung. Entsprechende Teigbearbeitungsanlagen sind bekannt aus der DE 10 2013 221 230 A1, der EP 2 071 955 B1, der EP 3 298 900 A, der DE 196 40 176 A1 und der EP 0 643 914 A1.

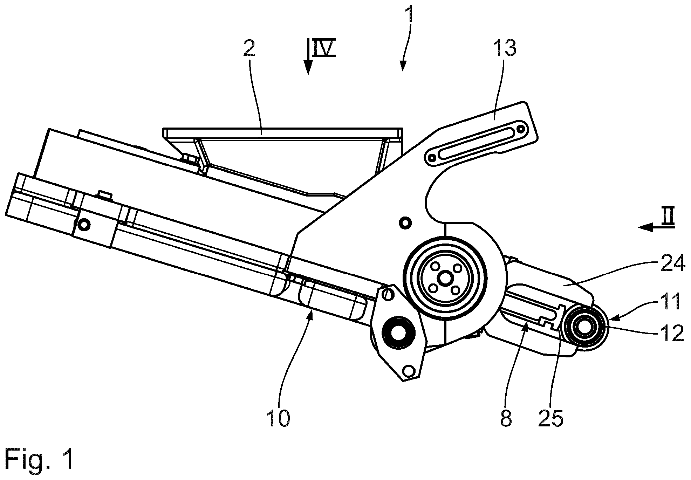

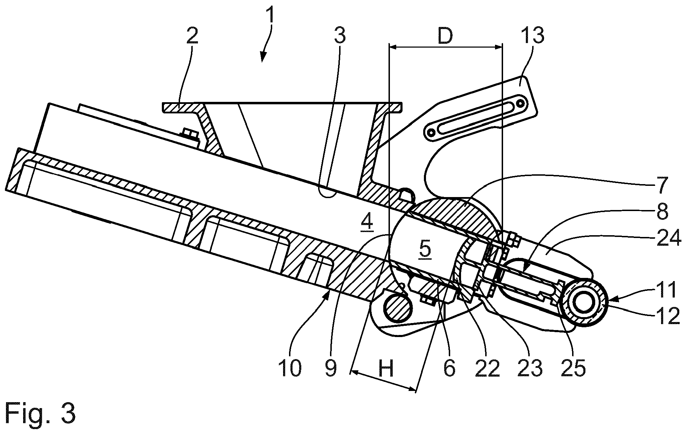

Nicht dargestellter Teig ist in einen Zuführtrichter 2 (vgl. z.B. Fig. 1) einfüllbar. Eine bodenseitige Ausgangsöffnung 3 (vgl. Fig. 3) des Zuführtrichters 2 steht mit einem Förderraum 4 in Verbindung, in dem ein in der Zeichnung nicht dargestellter Förderkolben läuft. Zusammen mit dem Zuführtrichter 2 stellt der Förderkolben eine Teig-Zuführeinrichtung der Teigbearbeitungsanlage dar.

Die Teigbearbeitungsanlage ist insgesamt mehrreihig ausgeführt und hat eine entsprechende Mehrzahl von Portionierkammern 5 zur Vorgabe jeweils einer portionierten Teigmenge. Bei der dargestellten Ausführung liegen insgesamt vier senkrecht zur Zeichenebene beispielweise der Fig. 1 und 3 nebeneinander angeordnete derartige Portionierkammern 5 vor. Mantelwände 6 der Portionierkammern 5 sind in einem Portionierzylinder 7 ausgebildet, der, angetrieben über einen nicht näher dargestellten Schwenkantrieb, um eine Schwenkachse verschwenkt werden kann, die senkrecht zur Zeichenebene der Fig. 1 und 3 angeordnet ist. Der Portionierzylinder 7 wird auch als Drehschieber bezeichnet. In den Fig. 1 und 3 liegt der Portionierzylinder 7 in einer Mess-Schwenkstellung vor, in der die Portionierkammern 5 mit dem Förderraum 4 fluchten und mit diesem in Teig-Förderverbindung stehen.

In den Portionierkammern 5 ist jeweils ein Messkolben 8 angeordnet. Der jeweilige Messkolben 8 hat einen ovalen Kolbenquerschnitt. Alternativ kann ein Kolbenquerschnitt des Messkolbens auch kreisrund ausgeführt sein. Der jeweilige Messkolben 8 ist in der ihm zugeordneten Portionierkammer 5 zwischen einer eingezogenen Messstellung, die in der Fig. 3 dargestellt ist, und einer ausgeschobenen Ausstoßstellung hubverlagerbar. In der Ausstoßstellung fluchtet eine stirnseitige Kolbenfläche des jeweiligen Messkolbens 8 mit einer Schwenk-Führungswand 9, die gleichzeitig einen Übergang zwischen dem Portionerzylinder 7 und einem Gehäuse 10 des Portioniermoduls 1 bildet.

Die Messkolben 8 können aus Kunststoff gefertigt sein.

Zur Verlagerung der Messkolben 8 von der Messstellung in die Ausstoßstellung dient eine Antriebseinheit 11, die eine als Steuerrolle 12 ausgebildete Steuerkomponente aufweist. Die Teigportioniervorrichtung ist so ausgeführt, dass eine Verlagerung der Messkolben 8 von der Ausstoßstellung in die Messstellung ausschließlich über einen vom zugeführten Teig auf die Messkolben 8 ausgeübten Förderdruck erfolgt.

Die Steuerrolle 12 hat eine Längserstreckung senkrecht zur Zeichenebene der Fig. 1 und 3. Die Steuerrolle 12 ist mit allen Messkolben 8 zur Übertragung einer Zugkraft von der Steuerrolle 12 auf die Messkolben 8 verbunden. Die Zugkraftübertragung führt dazu, dass alle Messkolben 8 über die Steuerrolle 12 bei der Hubverlagerung von der Ausstoßstellung in die Messstellung in die gleiche relative Endlage in der Messstellung in Bezug zur jeweiligen Portionierkammer 5 verbracht werden. Unterschiede zwischen Führungskräften einer Führung des jeweiligen Messkolbens in der zugehörigen Portionierkammer 5, hervorgerufen beispielsweise durch Teigreste, führen dann zu keinen Positionsabweichungen beim Erreichen der Messstellung im Vergleich zwischen den verschiedenen Messkolben 8 der Teigportioniervorrichtung. In der Messstellung geben somit alle Messkolben 8 aufgrund dieser Zugkraftübertragung exakt das gleiche Volumen innerhalb der Portionierkammer 5 vor und somit in jeder Reihe der Teigportioniervorrichtung exakt die gleiche Teigportion. Relative Mengenabweichungen zwischen den Teigportionen, die über die verschiedenen Reihen der Teigportioniervorrichtung, also über die verschiedenen Messkolben 8, vorgegeben werden, können kleiner als 2%, kleiner als 1% und können auch kleiner als 0,5%.

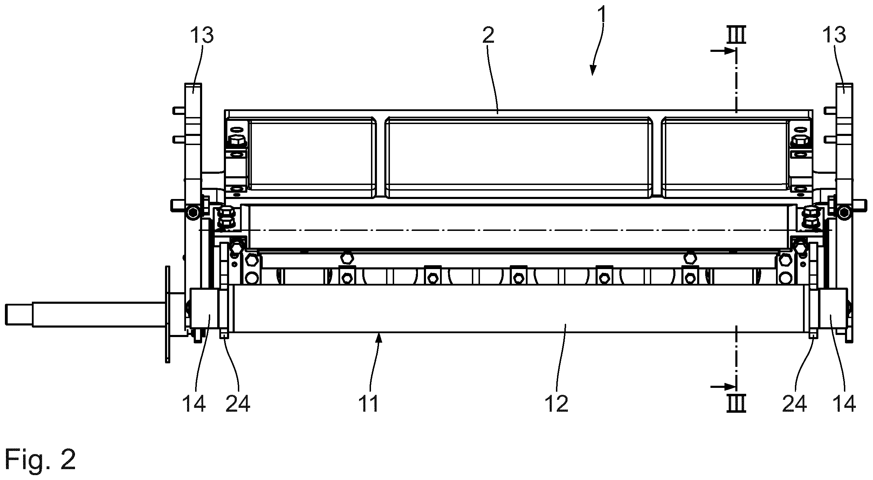

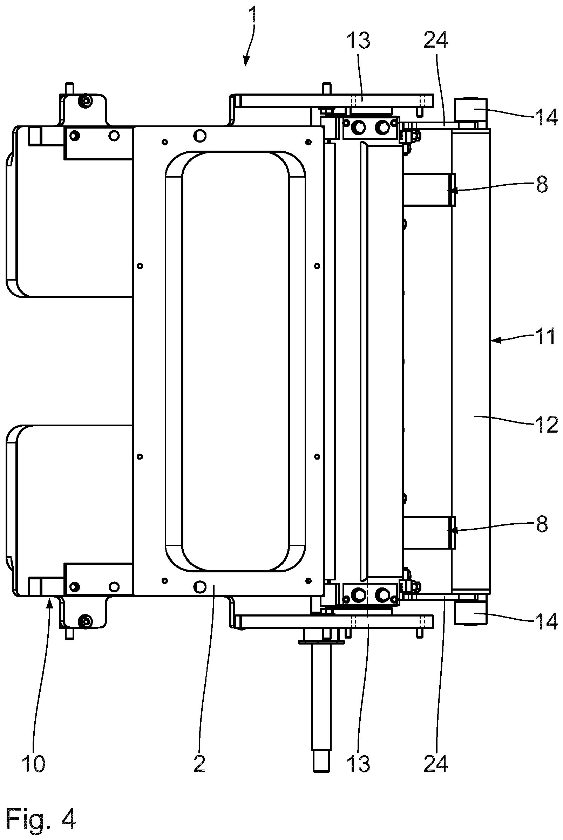

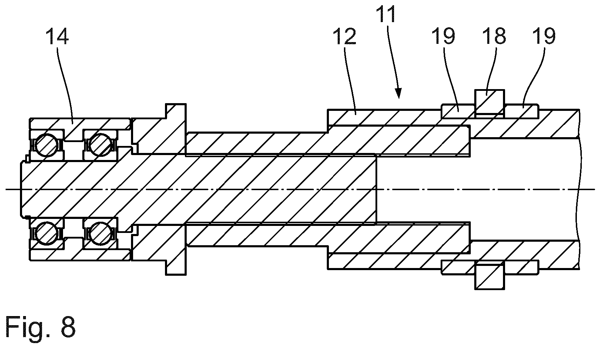

Zur Antriebseinheit 11 gehört weiterhin mindestens eine Steuerkurve 13 (vgl. Fig. 1 bis 4), die mit der Steuerrolle 12 zusammenwirkt. Die Steuerkurve 13 ist zweiteilig ausgeführt und wirkt mit gegenüberliegenden freien axialen Steuerabschnitten 14 der Steuerrolle 12 zusammen. Die Endabschnitte 14 sind gegenüber der sonstigen Steuerrolle 12 drehbar gelagert, wie die Fig. 8 darstellt.

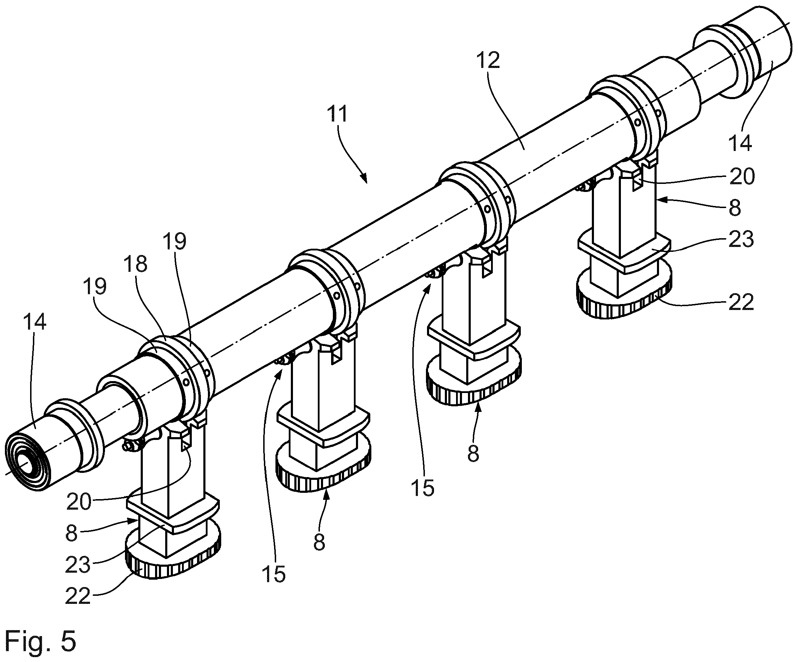

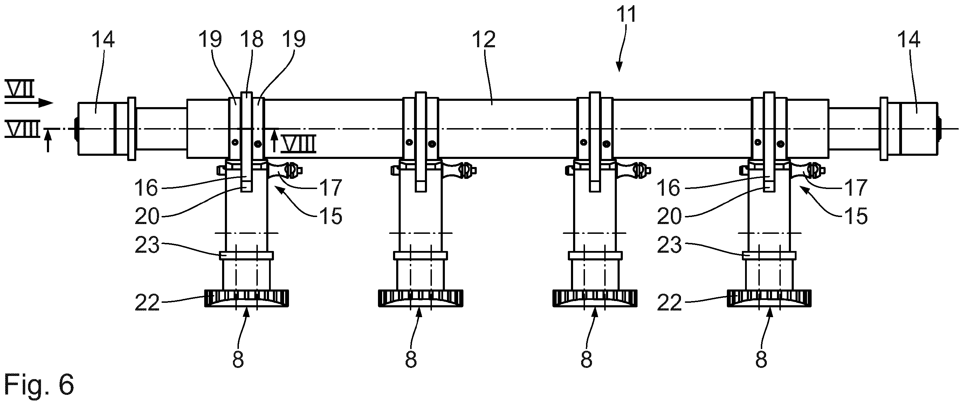

Die Zugkraftübertragung zwischen der Steuerrolle 12 und allen Messkolben 8 ist gewährleistet durch eine Verbindungseinheit 15 zwischen den jeweiligen Messkolben 8 und der Steuerrolle 12, die besonders in den Fig. 5 bis 8 dargestellt ist. In den Fig. 1 bis 4 ist diese Verbindungseinheit 15 weggelassen.

Die Verbindungseinheit 15 hat eine Ösen/Bolzenverbindung mit einer Öse 16, durch die ein Verbindungsbolzen 17 geführt ist. Die Öse 16 ist einstückig an einen Ringbund 18 der jeweiligen Verbindungseinheit 15 angeformt, der wiederum die Steuerrolle 12 umgibt. Eine Axialposition des jeweiligen Ringbundes 18 auf der Steuerrolle 12 ist fixiert über jeweils zwei Fixierringe 19, die den Ringbund 8 der jeweiligen Verbindungseinheit 15 jeweils zwischen sich aufnehmen und die ebenfalls die Steuerrolle 12 umgeben.

An seinem der Steuerrolle 12 zugewandten Ende hat der jeweilige Messkolben 8 eine Gabel-Ausnehmung 20, in die die Öse 16 des Ringbundes 18 eintaucht. Fluchtend mit einem Auge der Öse 16 sind in diesem freien Ende Durchgangsöffnungen 21 ausgeführt, die das Auge der Öse 16 zwischen sich aufnehmen. Der Verbindungsbolzen 17 ist durch die beiden Durchgangsöffnungen 21 des Messkolbens 8 und das zwischenliegende Auge der Öse 16 zur Schaffung der zugkraftübertragenden Verbindung zwischen dem jeweiligen Messkolben 8 und der Steuerrolle 12 hindurchgeführt. Durch diese Ösen/Bolzenverbindung der Verbindungseinheit 15 ergibt sich ein Schwenk-Freiheitsgrad der Verbindung um die Achse des Verbindungsbolzens 17. Ein derartiger Schwenk-Freiheitsgrad zwischen dem jeweiligen Messkolben 8 und der Steuerrolle 12 kann Verkantungen bei einer Bewegungsführung der Messkolben 8 vorbeugen.

Ein Durchmesser des Portionierzylinders 7 ist in der Fig. 3 bei D hervorgehoben. Ein Verlagerungshub des Messkolbens 8 zwischen der eingezogenen Messstellung und der ausgeschobenen Ausstoßstellung, der in der Fig. 3 bei H veranschaulicht ist, ist größer als der halbe Durchmesser D/2 des Portionierzylinders 7.

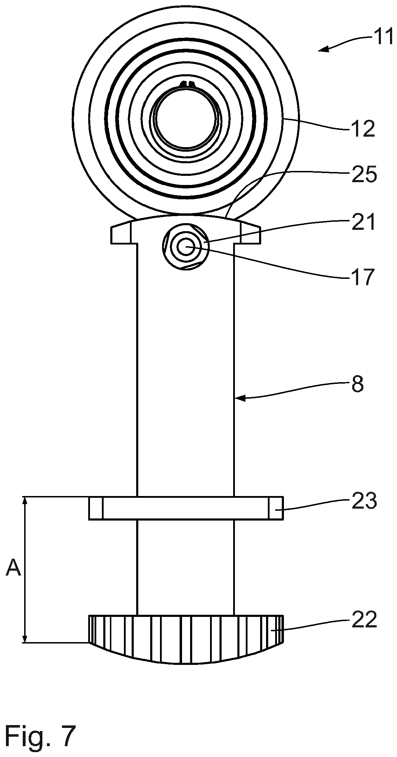

Der jeweilige Messkolben 8 ist über zwei axial beabstandete Führungsflächen 22, 23 in den zugeordneten Portionierkammern 5, nämlich an den Mantelwänden 6, geführt. Ein axialer Abstand A der Führungsflächen 22, 23 (vgl. Fig. 7), also eine effektive axiale Führungsflächenerstreckung des Messkolbens 8, ist kleiner als ein Drittel des Durchmessers D des Portionierzylinders 7. Anstelle mehrerer Führungsflächen zur Führung in der Portionierkammer 5 kann der jeweilige Messkolben 8 auch genau eine Führungsfläche aufweisen. Für die Axialerstreckung einer solchen, einzigen Führungsfläche gilt dann, was vorstehend für den axialen Abstand der Führungsflächen aufgeführt wurde.

Die Hubbewegung des Messkolbens zwischen der Messstellung und der Ausstoßstellung ist über eine zweiteilige Führungsgabel 24 geführt. In der Führungsgabel 24 läuft die Steuerrolle 12. In der Messstellung der Messkolben 8 liegt die Steuerrolle 12, wie in der Fig. 3 dargestellt, nahe einem freien Ende der Führungsgabel 24.

Beim Portionieren des Teigs sorgt der Teigdruck, der über die Teigförderung vom Förderraum 4 in die Portionierkammer 5 erzeugt wird, dafür, dass die zunächst in der Ausstoßstellung vorliegenden Messkolben 8 über den Teigdruck in die Messstellung beispielweise nach Fig. 3 überführt werden.

Über eine Stempelfläche 25 steht der jeweilige Messkolben 8 mit der Steuerrolle 12 in Schubverbindung. Diese Schubverbindung sorgt dafür, dass die Steuerrolle 12 in die in der Fig. 3 dargestellte Messstellung im Bereich des freien Endes der Führungsgabel 24 verlagert ist.

Die Zugverbindung über die jeweiligen Verbindungseinheiten 15 zwischen der Steuerrolle 12 und allen Messkolben 8 sorgt dafür, dass alle Messkolben 8, was die Relativpositionierung innerhalb der jeweiligen Portionierkammer 5 angeht, exakt die gleiche Position einnehmen, unabhängig davon, wie leicht- oder schwergängig die Führung über die Führungsflächen 22, 23 der individuellen Messkolben 8 erfolgt.

Nach Erreichen der Messstellung wird der Portionierzylinder 7 aus der Mess-Schwenkstellung in der Fig. 3 entgegen dem Uhrzeigersinn in die Ausstoß-Schwenkstellung verlagert. Die Messkolben 8 werden im Anschluss von der Messstellung, angetrieben über die Antriebseinheit 11, mit der Steuerrolle 12 und der Steuerkurve 13, in die Ausstoßstellung überführt. Die bis dahin in der Portionierkammer 5 vorliegende Teigportion wird hierüber in eine nachgelagerte Bearbeitungseinheit der Teigbearbeitungsanlage überführt.

## Patentansprüche

1. Mehrreihige Teigportioniervorrichtung
- mit einer Mehrzahl vom Portionierkammern (5) zur Vorgabe einer portionierten Teigmenge,
- mit einer Mehrzahl von Messkolben (8), die in den Portionierkammern (5) jeweils verlagerbar sind,
-- zwischen einer eingezogenen Messstellung, in der der jeweilige Messkolben (8) in der jeweiligen Portionierkammer (5) ein vorgegebenes Portioniervolumen vorgibt,
-- und einer ausgeschobenen Ausstoßstellung,
- wobei die Portionierkammern (5) in jeweils einem Portionierzylinder (7) untergebracht sind, der schwenkbar ist
-- zwischen einer Mess-Schwenkstellung, in der der Messkolben (8) in der Messstellung das vorgegebene Portioniervolumen vorgibt,
-- und einer verschwenkten Ausstoß-Schwenkstellung, in der der Messkolben (8) zur Übergabe einer Teigportion an eine nachgelagerte Bearbeitungseinheit in die Ausstoßstellung verlagerbar ist,
- wobei ein Verlagerungshub (H) des Messkolbens (8) zwischen der Messstellung und der Ausstoßstellung größer ist als ein halber Durchmesser (D) des Portionierzylinders (7),
- wobei der Messkolben (8) jeweils über zwei axial beabstandete Führungsflächen (22, 23) in der zugeordneten Portionierkammer (5) geführt ist, wobei ein axialer Abstand (A) der Führungsflächen (22, 23) kleiner ist als ein Drittel des Durchmessers (D) des Positionierzylinders (7),
wobei die Teigportioniervorrichtung ferner eine Antriebseinheit (11) umfasst, welche eine Steuerkomponente aufweist, zur Verlagerung der Messkolben (8) von der Messstellung in die Ausstoßstellung, wobei die Teigportioniervorrichtung so ausgeführt ist, dass eine Verlagerung der Messkolben (8) von der Ausstoßstellung in die Messstellung ausschließlich über einen vom Teig auf die Messkolben (8) ausgeübten Druck erfolgt, wobei die Steuerkomponente als Steuerrolle (12) ausgeführt ist, die zum Zusammenwirken mit einer Steuerkurve (13) der Antriebseinheit (11) ausgebildet ist, wobei die Steuerrolle (12) mit allen Messkolben (8) zur Übertragung einer Zugkraft von der Steuerrolle (12) auf die Messkolben (8) verbunden ist, wobei die Zugkraftübertragung dazu führt, dass alle Messkolben (8) über die Steuerrolle (12) bei der Hubverlagerung von der Ausstoßstellung in die Messstellung in die gleiche relative Endlage in der Messstellung in Bezug zur jeweiligen Portionierkammer (5) verbracht werden.

2. Teigportioniervorrichtung nach Anspruch 1 **dadurch gekennzeichnet, dass** eine Führungsrichtung des Messkolbens in der Portionierkammer senkrecht auf der Durchmesserdimension des Portionierzylinders steht.

3. Teigportioniervorrichtung nach einem der vorherigen Ansprüche, **dadurch gekennzeichnet, dass** eine Führungsrichtung des Messkolbens senkrecht auf einer Schwenkachse zum Verschwenken des Portionierzylinders zwischen der Mess-Schwenkstellung und der Ausstoß-Schwenkstellung steht.

4. Teigportioniervorrichtung nach einem der vorherigen Ansprüche, **dadurch gekennzeichnet, dass** der axiale Abstand der Führungsflächen kleiner ist als 30 % des Durchmessers des Portionierzylinders.

5. Teigportioniervorrichtung nach einem der vorherigen Ansprüche, **dadurch gekennzeichnet, dass** der axiale Abstand der Führungsflächen kleiner ist als 25 % des Durchmessers des Portionierzylinders.

6. Teigportioniervorrichtung nach einem der vorherigen Ansprüche, **dadurch gekennzeichnet, dass** der axiale Abstand der Führungsflächen kleiner ist als 20 % des Durchmessers des Portionierzylinders.

7. Teigportioniervorrichtung nach einem der vorherigen Ansprüche,
**dadurch gekennzeichnet, dass** eine Verbindungseinheit (15) zwischen den jeweiligen Messkolben (8) und der Steuerrolle (12) eine Ösen/ Bolzenverbindung (16, 17) aufweist.

8. Teigportioniervorrichtung nach einem der vorherigen Ansprüche,
**dadurch gekennzeichnet, dass** der Messkolben (8) aus Kunststoff ausgeführt ist.

9. Teigbearbeitungsanlage mit einer Teigportioniervorrichtung nach einem der Ansprüche 1 bis 8.

## Claims

1. Multiple-row dough portioning apparatus
- with a plurality of portioning chambers (5) to define a portioned dough quantity,
- with a plurality of metering pistons (8), which are each displaceable in the portioning chambers (5),
-- between a retracted metering position in which the respective metering piston (8) defines a predetermined portioning volume in the respective portioning chamber (5),
-- and an extended ejection position,
- wherein the portioning chambers (5) are accommodated in a respective portioning cylinder (7), which is pivotable
-- between a metering pivot position in which the metering piston (8) defines the predetermined portioning volume in the metering position,
-- and a pivoted ejection pivot position in which the metering piston (8) is displaceable into the ejection position in order to deliver a dough portion to a downstream processing unit,
- wherein a displacement stroke (H) of the metering piston (8) between the metering position and the ejection position is greater than half a diameter (D) of the portioning cylinder (7),
- wherein the metering piston (8) is in each case guided in the associated portioning chamber (5) by two axially spaced guide surfaces (22, 23), wherein an axial distance (A) of the guide surfaces (22, 23) is smaller than one third of the diameter (D) of the portioning cylinder (7),
wherein the dough portioning apparatus further comprises a drive unit (11) having a control component (12), the drive unit (11) being configured to displace the metering piston (8) from the metering position into the ejection position, wherein the dough portioning apparatus is configured such that a displacement of the metering pistons (8) from the ejection position into the metering position takes place exclusively on account of a pressure exerted on the metering pistons (8) by the dough, wherein the control component is configured as control roller (12), which is configured to interact with a control cam (13) of the drive unit (11), wherein the control roller (12) is connected to all metering pistons (8) to transmit a tensile force from the control roller (12) to the metering pistons (8), wherein the tensile force transmission results in all metering pistons (8) being brought into the same relative end position in the metering position in relation to the respective portioning chamber (5) via the control roller (12) during the stroke displacement from the ejection position into the metering position.

2. Dough portioning apparatus as claimed in claim 1, **characterized in that** a guide direction of the metering piston in the portioning chamber is perpendicular to the diameter dimension of the portioning cylinder.

3. Dough portioning apparatus as claimed in any one of the preceding claims, **characterized in that** a guide direction of the metering piston is perpendicular to a pivot axis when pivoting the portioning cylinder between the metering pivot position and the ejection pivot position.

4. Dough portioning apparatus as claimed in any one of the preceding claims, **characterized in that** the axial distance of the guide surfaces is smaller than one third of the diameter of the portioning cylinder.

5. Dough portioning apparatus as claimed in any one of the preceding claims, **characterized in that** the axial distance of the guide surfaces is smaller than one fourth of the diameter of the portioning cylinder.

6. Dough portioning apparatus as claimed in any one of the preceding claims, **characterized in that** the axial distance of the guide surfaces is smaller than one fifth of the diameter of the portioning cylinder.

7. Dough portioning apparatus as claimed in any one of the preceding claims, **characterized in that** a connecting unit (15) between the respective metering pistons (8) and the control roller (12) has a lug/bolt connection (16, 17).

8. Dough portioning apparatus as claimed in any one of the preceding claims, **characterized in that** the metering piston (8) is made of plastics.

9. Dough processing plant with a dough portioning apparatus as claimed in any one of claims 1 to 8.

## Revendications

1. Dispositif de mise en portions de pâte à plusieurs rangées
- comprenant une pluralité de chambres de mise en portions (5) destinée à déterminer une quantité de pâte divisée en portions,
- une pluralité de pistons de mesure (8) qui sont chacun déplaçables dans les chambres de mise en portions (5)
-- entre une position de mesure rétractée dans laquelle le piston de mesure (8) respectif dans la chambre de mise en portions (5) respective définit un volume de mise en portions prédéterminé,
-- et une position d'éjection repoussée,
- dans lequel les chambres de mise en portions (5) sont chacune logées dans un cylindre de mise en portions (7) qui peut pivoter
-- entre une position pivotée de mesure, dans laquelle le piston de mesure (8) en position de mesure définit le volume de mise en portions prédéterminé,
-- et une position pivotée d'éjection, dans laquelle le piston de mesure (8) peut être déplacé dans la position d'éjection pour transférer une portion de pâte vers une unité de traitement en aval,
- dans lequel une course de déplacement (H) du piston de mesure (8) entre la position de mesure et la position d'éjection est supérieure à un demi-diamètre (D) du cylindre de mise en portions (7),
- dans lequel le piston de mesure (8) est guidé dans la chambre de mise en portions (5) associée, à chaque fois par l'intermédiaire de deux surfaces de guidage (22, 23) espacées axialement, un espacement axial (A) des surfaces de guidage (22, 23) étant inférieur à un tiers du diamètre (D) du cylindre de mise en portions (7),
- dans lequel le dispositif de mise en portions de pâte comprend en outre une unité d'entraînement (11), qui présente un élément de commande, pour déplacer les pistons de mesure (8) de la position de mesure à la position d'éjection, le dispositif de mise en portions de pâte étant conçu de sorte qu'un déplacement des pistons de mesure (8) de la position d'éjection à la position de mesure s'effectue exclusivement par une pression exercée par la pâte sur les pistons de mesure (8),
- dans lequel l'élément de commande est conçu comme un galet de commande (12) qui est conçu pour coopérer avec une came de commande (13) de l'unité d'entraînement (11), dans lequel le galet de commande (12) est relié à tous les pistons de mesure (8) pour transmettre une force de traction du galet de commande (12) aux pistons de mesure (8), dans lequel la transmission de la force de traction a pour conséquence que tous les pistons de mesure (8) sont amenés dans la même position finale relative dans la position de mesure par rapport à la chambre de mise en portions respective (5) par l'intermédiaire du galet de commande (12) pendant le déplacement de la course de la position d'éjection à la position de mesure.

2. Dispositif de mise en portions de pâte selon la revendication 1, **caractérisé en ce qu'**une direction de guidage du piston de mesure dans la chambre de mise en portions est perpendiculaire à la dimension du diamètre du cylindre de mise en portions.

3. Dispositif de mise en portions de pâte selon l'une quelconque des revendications précédentes, **caractérisé en ce qu'**une direction de guidage du piston de mesure est perpendiculaire à un axe de pivotement pour faire pivoter le cylindre de mise en portions entre la position pivotée de mesure et la position pivotée d'éjection.

4. Dispositif de mise en portions de pâte selon l'une quelconque des revendications précédentes, **caractérisé en ce que** l'espacement axial des surfaces de guidage est inférieur à 30% du diamètre du cylindre de mise en portions.

5. Dispositif de mise en portions de pâte selon l'une quelconque des revendications précédentes, **caractérisé en ce que** l'espacement axial des surfaces de guidage est inférieur à 25% du diamètre du cylindre de mise en portions.

6. Dispositif de mise en portions de pâte selon l'une quelconque des revendications précédentes, **caractérisé en ce que** l'espacement axial des surfaces de guidage est inférieur à 20 % du diamètre du cylindre de mise en portions.

7. Dispositif de mise en portions de pâte selon l'une quelconque des revendications précédentes, **caractérisé en ce qu'**une unité de liaison (15) entre les pistons de mesure respectifs (8) et le galet de commande (12) présente une liaison par œillets/boulons (16, 17).

8. Dispositif de mise en portions de pâte selon l'une quelconque des revendications précédentes, **caractérisé en ce que** le piston de mesure (8) est conçu en matière plastique.

9. Installation de traitement de pâte comprenant un dispositif de mise en portions de pâte selon l'une quelconque des revendications 1 à 8.
